# EUROPÄISCHE PATENTSCHRIFT

(11) **EP 0 870 936 B1**
(45) Veröffentlichungstag und Bekanntmachung des Hinweises auf die Patenterteilung: **17.07.2002**
(21) Anmeldenummer: 98103178.4
(22) Anmeldetag: 24.02.1998
(51) Int. Cl.: F16B 19/00, E04F 13/08

(54) **Isolierdorn-Dübel**
Insulation anchor dowel
Cheville d'ancrage d'isolation

(30) Priorität: 12.04.1997 DE 19715339
(43) Veröffentlichungstag der Anmeldung: 14.10.1998
(73) Patentinhaber: TOGE-Dübel A. Gerhard KG, 90431 Nürnberg (DE)
(72) Erfinder: Gerhard, Anton, 90427 Nürnberg (DE)
(74) Vertreter: Rau, Manfred, Dr. Dipl.-Ing.

(56) Entgegenhaltungen:
- EP-A- 0 701 068
- DE-B- 1 157 856
- DE-U- 8 605 148
- FR-A- 2 724 697
- US-A- 1 435 434

## Beschreibung

Die Erfindung betrifft einen Isolierdorn-Dübel nach dem Oberbegriff des Anspruches 1.

Ein derartiger, aus der EP 0 701 068 A1 bekannter Isolierdorn-Dübel weist eine elastisch zusammendrückbare Spreizhülse auf. Er wird zur Befestigung von Isolierplatten an Hauswänden u. dgl. verwendet. Hierbei wird die Isolierplatte gegen die Mauer gedrückt und dann ein Bohrloch durch die Platte in die Mauer gesetzt. Der Isolierdorn-Dübel wird durch das Loch in der Isolierplatte in das Bohrloch in der Mauer eingetrieben, und zwar in der Regel mit leichten Hammerschlägen. Beim Eintreiben der Spreizhülse in die Bohrung schiebt sich der Bereich der Spreizhülse, dessen Längskante einen geringeren radialen Abstand zur Mittel-Längs-Achse hat, unter den der anderen Längskante zugeordneten Bereich. Damit ist eine Anpassung an große Unterschiede in den Durchmessern der Bohrlöcher möglich. In der Praxis hat sich gezeigt, daß die radiale Verspannung der Spreizhülse in einer Bohrung, und zwar insbesondere in Gitterziegeln, oft nicht so groß ist, daß eine vorgeschriebene Auszugskraft erreicht wird.

Der Erfindung liegt daher die Aufgrunde zugrunde, einen Isolierdorn-Dübel der gattungsgemäßen Art so auszugestalten, daß hohe Auszugswerte, und zwar auch bei Einsatz in Gitterziegeln, erreicht werden.

Diese Aufgabe wird erfindungsgemäß durch die Merkmale im Kennzeichnungsteil des Anspruches 1 gelöst. Das verformbare Widerlager führt dazu, daß dem Zusammendrücken der Spreizhülse beim Einschlagen in ein Bohrloch ein nicht unbeträchtlicher Verformungswiderstand entgegensteht. Die Spreizhülse behält also in einer Bohrung immer ihren maximal möglichen Außenumfang, liegt also fest an der Bohrungswand an, wodurch entsprechend hohe Reibungskräfte zwischen der Spreizhülse und der Bohrungswand, d. h. entsprechend hohe Auszugskräfte, erreicht werden.

Zahlreiche vorteilhafte und zum Teil erfinderische Ausgestaltungen ergeben sich aus den Unteransprüchen.

Nachfolgend wird ein Ausführungsbeispiel der Erfindung anhand der Zeichnung näher erläutert. Es zeigt:
- Fig. 1: einen Blech-Zuschnitt für einen Isolierdorn-Dübel in perspektivischer Darstellung,
- Fig. 2: einen aus dem Blech-Zuschnitt nach Fig. 1 hergestellten Isolierdorn-Dübel in perspektivischer Darstellung,
- Fig. 3: einen Querschnitt durch den Isolierdorn-Dübel gemäß der Schnittlinie III-III in Fig. 2 in vergrößertem Maßstab,
- Fig. 4: einen Isolierdorn-Dübel in perspektivischer Darstellung mit gegenüber den Fig. 1 bis Fig. 3 geänderten Widerlagern,
- Fig. 5: einen Querschnitt durch den Isolierdorn-Dübel gemäß der Schnittlinie V - V in Fig. 4 in vergrößertem Maßstab.

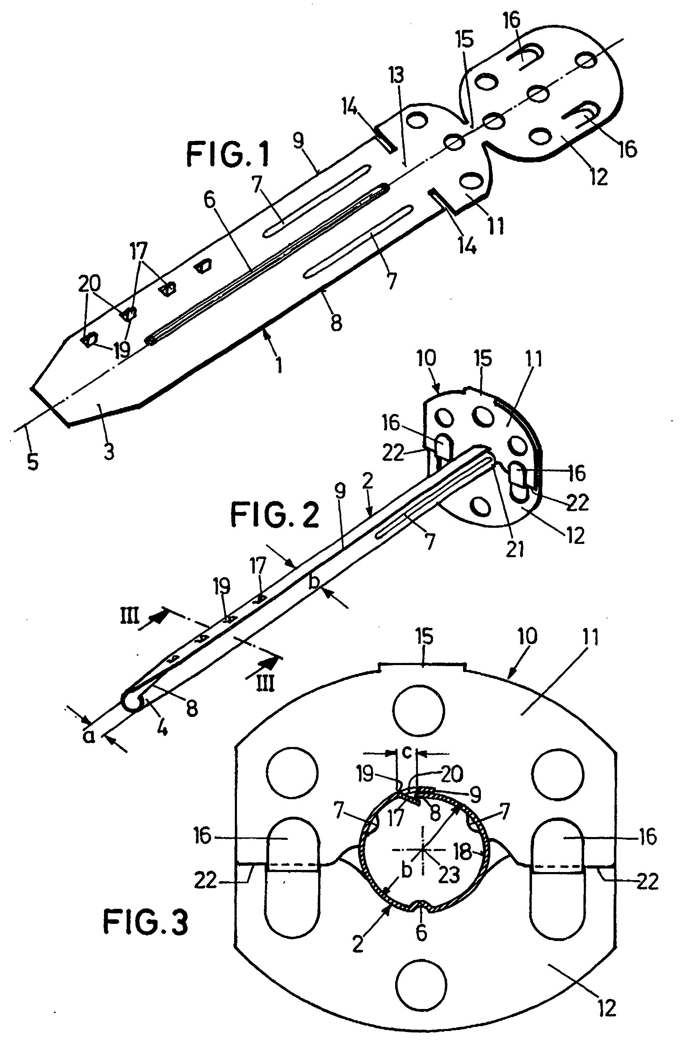

Der in Fig. 1 dargestellte Blech-Zuschnitt ist einstückig ausgebildet. Er weist einen langgestreckten, im wesentlichen rechteckigen Abstand 1 auf, aus dem eine Spreizhülse 2 gerollt wird. Der Abschnitt 1 ist im Bereich seines freien Endes mit einer trapezförmigen Verjüngung 3 versehen, aus der ein verjüngtes Einführende 4 der Spreizhülse 2 gebildet wird. Der Abschnitt 1 weist im Bereich seiner Mittellinie 5, die im wesentlichen eine Symmetrieachse ist, eine sich über einen wesentlichen Teil der Länge des Abschnittes 1 erstreckende, durch eine Sicke gebildete Verstärkungsrippe 6 auf. Beiderseits dieser Verstärkungsrippe 6 sind in dem der Verjüngung abgewandten Bereich noch zwei weitere kürzere Verstärkungsrippen 7 ausgebildet. Der Abschnitt 1 weist zwei zueinander parallele Längskanten 8, 9 auf.

An dem der Verjüngung 3 abgewandten Ende des Abschnitts 1 sind Zuschnitt-Teile ausgeformt, aus denen ein Halteteil 10 des Spreizdübels geformt wird, das in der Praxis auch als Halteteller bezeichnet wird. Hierzu schließt sich an den Abschnitt 1 ein Zwischenteil 11 an, das in seiner Umrißform etwa dem halben sich anschließenden den Halteteil 10 bildenden Hauptteil 12 entspricht. Das Zwischenteil 11 ist durch einen symmetrisch zur Mittellinie 5 angeordneten Steg 13 mit dem Abschnitt 1 verbunden, d. h. von beiden Längskanten 8, 9 her sind symmetrisch zur Mittellinie 5 und quer zu dieser Einschnitte 14 ausgebildet. Das Zwischenteil 11 und das Hauptteil 12 sind durch einen schmalen, ebenfalls symmetrisch zur Mittellinie 5 und quer zu dieser verlaufenden Steg 15 miteinander verbunden.

Aus dem Hauptteil 12 sind beiderseits und symmetrisch zur Mittellinie 5 je eine Verriegelungszunge 16 freigestanzt und teilweise aus dem Hauptteil 12 herausgebogen.

Im Abstand von der Mittellinie 5 und auf einer zu dieser parallelen Linie sind benachbart zu einer Längskante 9 und parallel zu beiden Längskanten 8, 9 eine Reihe kleiner Widerlager 17 ausgebildet, und zwar beginnend ab der Verjüngung 3. Diese Widerlager 17 sind durch kleine Zungen gebildet, die aus dem Abschnitt 1 ausgestanzt und aus der Ebene des Abschnittes 1 herausgebogen sind, wobei sie von der späteren Innenwand der Spreizhülse 2 nach innen in letztere hineinragen. Sie sind jeweils längs einer Verbindungskante 19 noch mit dem Abschnitt 1 verbunden, um die sie in der geschilderten Weise aus der Ebene des Abschnitts 1 herausgebogen sind. Diese auf einer gemeinsamen Linie liegenden Verbindungskanten 19 der Widerlager 17 sind am nächsten benachbart zur Mittellinie 5, d. h. die durch die Widerlager 17 freigestanzten Öffnungen 20 erstrecken sich von den Verbindungskanten 19 in Richtung zur Längskante 9.

Um aus dem Blech-Zuschnitt, der die geschilderte, in Fig. 1 dargestellte Form hat, einen Isolierdorn-Dübel herzustellen, wird einerseits der Abschnitt 1 zur Spreizhülse 2 gerollt und das Zwischenteil 11 um 90° gebogen, und zwar - bezogen auf Fig. 1 - aus der Zeichnungsebene nach oben, so daß der Steg 13 anschließt das dem Einführende 4 entfernte Halteende 21 der Spreizhülse 2 überdeckt. Das Hauptteil 12 wird um den Steg 15 entgegengesetzt um 180° gebogen, so daß es auf dem Zwischenteil 11 zur Anlage kommt. Die Verriegelungszungen 16 werden dann um die die Einschnitte 14 begrenzenden Querkanten 22 des Zwischenteils 11 herumgebogen, wodurch das Zwischenteil 11 und das Hauptteil 12 fest zum tellerartigen Halteteil 10 miteinander verbunden werden.

Beim Rollen bzw. Biegen des Abschnittes 1 zur Spreizhülse 2 werden die den Längskanten 8, 9 benachbarten Bereiche in eine einander überdeckende Stellung gebracht, wie es in Fig. 2 und insbesondere Fig. 3 erkennbar ist. Die den Widerlagern 17 benachbarte Längskante 9 liegt dabei außen, während die andere Längskante 8 in die Spreizhülse 2 eingreift. Sie liegt gegen die Widerlager 17 an, wie es ebenfalls in Fig. 3 dargestellt ist.

Der Durchmesser a des Einführendes 4 der Spreizhülse 2 ist kleiner als der kleinstmögliche Durchmesser einer Bohrung im Mauerwerk. Der Durchmesser b der Spreizhülse 2 im unverformten Zustand in etwas größer als der größtmögliche Durchmesser einer Bohrung. Wenn von einem kleinstmöglichen bzw. größtmöglichen Durchmesser einer Bohrung gesprochen wird, dann bezieht sich dies auf den Nenndurchmesser einer Bohrung, der durch den Nenndurchmesser eines Bohrers bestimmt wird. Je weicher das Material des Mauerwerks ist, um größer kann die Bohrung werden, die mit einem vorgegebenen Bohrer gebohrt wird. Andererseits kann der Durchmesser der Bohrung sich auch durch Bohrerverschleiß ändern. Wenn beispielsweise eine Bohrung mit einem Nenndurchmesser von 8 mm gebohrt wird, dann kann ihr tatsächlicher Durchmesser bei Beton im Bereich von 8,1 bis 8,3 mm liegen. Wenn der Durchmesser des Bohrers durch Verschleiß abnimmt, wird er in der Regel ausgewechselt. Bei Mauerwerk aus Gitterziegeln wird für den Einsatz eines gleichartigen Isolierdorn-Dübels ein Bohrer mit einem Nenndurchmesser von 6 mm eingesetzt. Der tatsächliche Durchmesser der Bohrung im Mauerwerk liegt dann zwischen 7 und 8 mm, und zwar in der Regel bei 7 mm. Beim Eintreiben der Spreizhülse 2 in eine Bohrung wird die Spreizhülse 2 zusammengedrückt, d. h. der von der Längskante 9 begrenzte Bereich der Spreizhülse 2 wird stärker unter den durch die Längskante 8 begrenzten Bereich geschoben.

Hierdurch werden die stegartigen bzw. zungenartigen Widerlager 17 um ihre Verbindungskante 19 verbogen. Beim Eintreiben der Spreizhülse 2 in eine Bohrung und dem dadurch bedingten Zusammendrücken der Spreizhülse 2 muß also auch die zum Verformen der Widerlager 17 erforderliche Kraft aufgebracht werden. Dadurch ist sichergestellt, daß die Spreizhülse fest an der Bohrungswand anliegt. Die Dimensionierung der Widerlager 17 ist derart, daß die üblichen Bohrungs-Tolerenzen aufgenommen werden können. Wie in Fig. 3 angedeutet ist, ist der mögliche Verschiebeweg c der Längskanten 8, 9 zueinander, bei dem die Längskante 9 im Eingriff mit den Widerlagern 17 bleibt, relativ groß. Wenn die Widerlager 17 völlig umgebogen sind, also an der Innenwand 18 der Spreizhülse 2 anliegen, dann wird die Längskante 9 weiter nach innen zur Mittel-Längs-Achse 23 der Spreizhülse 2 abgelenkt, wodurch auch wiederum noch große Gegenkräfte auftreten.

Durch die geschilderte Ausgestaltung der Spreizhülse 2 werden verhältnismäßig hohe Auszugkräfte erreicht, d. h. die Spreizhülse 2 sitzt sehr fest in einer Bohrung, und zwar nicht nur in Beton, sondern auch in Mauerwerk und insbesondere in Mauerwerk aus Gitterziegeln.

Die Ausgestaltung des einstückigen Blech-Zuschnitts mit den angeformten Teilen zur Bildung des Halteteils ist auch eigenständig erfinderisch.

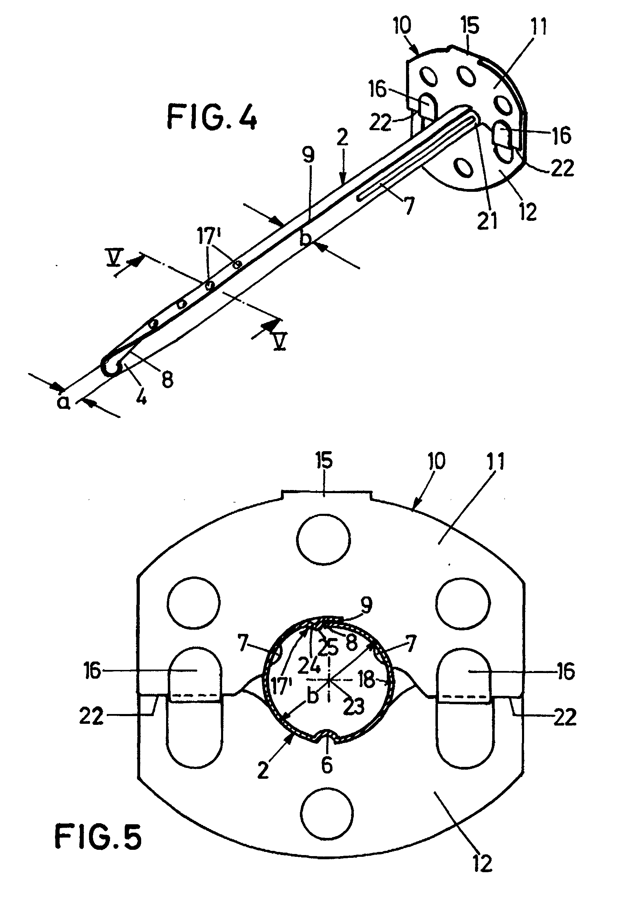

Das Ausführungsbeispiel nach den Fig. 4 und 5 unterscheidet sich von dem nach den Fig. 1 bis 3 nur durch die Ausgestaltung der Widerlager 17'; ansonsten werden für alle übrigen Teile dieselben Bezugsziffern verwendet; einer erneuten Beschreibung bedarf es nicht.

Die Widerlager 17' sind durch Noppen gebildet, die ebenfalls in einer zu den Längskanten 8, 9 parallelen Reihe angeordnet sind. Diese Noppen weisen einen kegelförmigen Mantel 24 mit einer Abrundung 25 im Spitzenbereich auf. Durch die kegelförmige Ausgestaltung des Mantels 24 wird für die innere Längskante 8 eine Auflauffläche gebildet, durch die beim Zusammendrücken der Spreizhülse 2 dieser innenliegende, der inneren Längskante 3 benachbarte und zugeordnete Bereich der Spreizhülse 2 radial nach innen gedrückt wird und je nach Grad der Zusammendrückung mit einer gewissen Vorspannung gegen den Mantel 24 bzw. die Abrundung 25 des jeweiligen Widerlagers 17' anliegt.

## Patentansprüche

1. Isolierdorn-Dübel aus Metall-Blech
- mit einer Spreizhülse (2),
- - die im wesentlichen zylindrisch ausgebildet ist,
- - einander übergreifende Längskanten (8, 9) aufweist und
- - mit einem Einführende (4) versehen ist, und
- mit einem tellerartigen Halteteil (10),
- - das mit dem dem Einführende (4) entgegengesetzten Ende der Spreizhülse (2) verbunden ist,
**dadurch gekennzeichnet,**
**daß** die Spreizhülse (2) mit mindestens einem nach innen ragenden, benachbart zur außenliegenden Längskante (9) angeordneten Widerlager (17, 17') versehen ist, gegen das bei radialem Zusammendrücken der Spreizhülse (2) der der innenliegenden Längskante (8) benachbarte Bereich der Spreizhülse (2) angepreßt wird.

2. Isolierdorn-Dübel nach Anspruch 1, **dadurch gekennzeichnet,**
**daß** das Widerlager (17) bei radialem Zusammendrücken der Spreizhülse (2) von der innenliegenden Längskante (8) verformt wird.

3. Isolierdorn-Dübel nach Anspruch 1 oder 2, **dadurch gekennzeichnet,**
**daß** das mindestens eine Widerlager (17) zungenartig aus der Spreizhülse (2) gebogen ist, wodurch eine Öffnung (20) in der Spreizhülse (2) gebildet ist.

4. Isolierdorn-Dübel nach Anspruch 3, **dadurch gekennzeichnet,**
**daß** das mindestens eine Widerlager (17) um eine Verbindungskante (19) gebogen ist, die im wesentlichen parallel zu mindestens einer Längskante (8, 9) verläuft.

5. Isolierdorn-Dübel nach Anspruch 4, **dadurch gekennzeichnet,**
**daß** die Verbindungskante (19) auf der Seite der Öffnung (20) angeordnet ist, die der außenliegenden Längskante (9) abgewandt ist.

6. Isolierdorn-Dübel nach Anspruch 1, **dadurch gekennzeichnet,**
**daß** das mindestens eine Widerlager (17') noppenartig ausgebildet ist.

7. Isolierdorn-Dübel nach Anspruch 6, **dadurch gekennzeichnet,**
**daß** das Widerlager (17') eine der innenliegenden Längskante (8) zugewandte Auflauffläche aufweist.

8. Isolierdorn-Dübel nach Anspruch 6 oder 7, **dadurch gekennzeichnet,**
**daß** das Widerlager (17') einen im wesentlichen kegelförmigen Mantel (24) mit einer Abrundung (25) im Spitzenbereich aufweist.

9. Isolierdorn-Dübel nach einem der Ansprüche 1 bis 8, **dadurch gekennzeichnet,**
**daß** mehrere Widerlager (17, 17') in einer zu der innenliegenden Längskante (8) etwa parallelen Reihe vorgesehen sind.

10. Isolierdorn-Dübel nach einem der Ansprüche 1 bis 9, **dadurch gekennzeichnet,**
**daß** das Halteteil (10) und die Spreizhülse (2) aus einem einstöckigen Blech-Zuschnitt geformt sind.

## Claims

1. Insulation anchor dowel of metal sheet, comprising
- an expansion sleeve (2),
-- which is substantially cylindrical,
-- which has longitudinal edges (8, 9) that overlap each other, and
-- which is provided with a pilot (4);
and
- a disk-type holding member (10),
-- which is joined to the end, turned away from the pilot (4), of the expansion sleeve (2);
**characterized**
**in that** the expansion sleeve (2) is provided with at least one inwardly projecting abutment (17, 17') which is disposed in the neighborhood of the external longitudinal edge (9) and which the area of the expansion sleeve (2) that is adjacent the inside longitudinal edge (8) is pressed against upon radial compression of the expansion sleeve (2).

2. Insulation anchor dowel according to claim 1, **characterized**
**in that** the abutment (17) is deformed by the inside longitudinal edge (8) upon radial compression of the expansion sleeve (2).

3. Insulation anchor dowel according to claim 1 or 2, **characterized**
**in that** the at least one abutment (17) is bent in the way of a tongue from the expansion sleeve (2), as a result of which an opening (20) is formed in the expansion sleeve (2).

4. Insulation anchor dowel according to claim 3, **characterized**
**in that** the at least one abutment (17) is bent around a connection edge (19) which runs substantially parallel to at least one longitudinal edge (8, 9).

5. Insulation anchor dowel according to claim 4, **characterized**
**in that** the connection edge (19) is on the side of the opening (20) that is turned away from the external longitudinal edge (9).

6. Insulation anchor dowel according to claim 1, **characterized**
**in that** the at least one abutment (17') is knobbed.

7. Insulation anchor dowel according to claim 6, **characterized**
**in that** the abutment (17') has a stopping surface that is turned toward the inside longitudinal edge (8).

8. Insulation anchor dowel according to claim 6 or 7, **characterized**
**in that** the abutment (17') has a substantially conical jacket (24) with a rounding (25) in the tip area.

9. Insulation anchor dowel according to one of claims 1 to 8, **characterized**
**in that** several abutments (17, 17') are provided in a row that is approximately parallel to the inside longitudinal edge (8).

10. Insulation anchor dowel according to one of claims I to 9, **characterized**
**in that** the holding member (10) and the expansion sleeve (2) are formed from a single-piece metal sheet blank.

## Revendications

1. Cheville d'ancrage d'isolation en tôle métallique,
- comportant une douille à écartement (2),
-- qui est réalisée sensiblement cylindrique,
-- qui comprend des arêtes longitudinales (8, 9) qui se coiffent mutuellement, et
-- qui est pourvue d'une extrémité d'introduction (4),
et
- comportant une partie de maintien (10) en forme de plateau,
-- qui est reliée à l'extrémité, opposée à l'extrémité d'introduction (4), de la douille à écartement (2),
**caractérisée en ce que**
la douille à écartement (2) est pourvue d'au moins une contre-butée (17, 17') en saillie vers l'intérieur et agencée au voisinage de l'arête longitudinale (9) située à l'extérieur, contre-butée contre laquelle est pressée la zone de la douille à écartement (2), qui est voisine de l'arête longitudinale (8) située à l'intérieur, lors d'une compression radiale de la douille à écartement (2).

2. Cheville d'ancrage d'isolation selon la revendication 1, **caractérisée en ce que** la contre-butée (17) est déformée par l'arête longitudinale (8) située à l'intérieur lors de la compression radiale de la douille à écartement (2).

3. Cheville d'ancrage d'isolation selon l'une ou l'autre des revendications 1 et 2, **caractérisée en ce que** ladite au moins une contre-butée (17) est cintrée en forme de languette hors de la douille à écartement (2), ce pourquoi une ouverture (20) se forme dans la douille à écartement (2).

4. Cheville d'ancrage d'isolation selon la revendication 3, **caractérisée en ce que** ladite au moins une contre-butée (17) est cintrée autour d'une arête de liaison (19) qui s'étend sensiblement parallèlement à au moins une arête longitudinale (8, 9).

5. Cheville d'ancrage d'isolation selon la revendication 4, **caractérisée en ce que** l'arête de liaison (19) est agencée sur le côté de l'ouverture (20) qui est détourné de l'arête longitudinale (9) située à l'extérieur.

6. Cheville d'ancrage d'isolation selon la revendication 1, **caractérisée en ce que** ladite au moins une contre-butée (17') est réalisée en forme de bouton.

7. Cheville d'ancrage d'isolation selon la revendication 6, **caractérisée en ce que** la contre-butée (17') comprend une surface de montée tournée vers l'arête longitudinale (8) située à l'intérieur.

8. Cheville d'ancrage d'isolation selon l'une ou l'autre des revendications 6 et 7, **caractérisée en ce que** la contre-butée (17') comprend une enveloppe (24) sensiblement conique comportant un arrondi (25) dans la zone de la pointe.

9. Cheville d'ancrage d'isolation selon l'une des revendications 1 à 8, **caractérisée en ce qu'**il est prévu plusieurs contre-butées (17, 17') en une rangée approximativement parallèle à l'arête longitudinale (8) située à l'intérieur.

10. Cheville d'ancrage d'isolation selon l'une des revendications 1 à 9, **caractérisée en ce que** la partie de maintien (10) et la douille à écartement (2) sont formées à partir d'un flan de tôle d'un seul tenant.
